# FASCICULE DE BREVET EUROPEEN

(11) **EP 0 520 848 B1**
(45) Date de publication et mention de la délivrance du brevet: **17.11.1994**
(21) Numéro de dépôt: 92401530.8
(22) Date de dépôt: 04.06.1992
(51) Int. Cl.: G01L 5/04, G01L 5/10, G01L 1/04, H01H 3/46

(54) **Bielle dynamométrique**
Dynamometrische Stange
Dynamometric rod

(30) Priorité: 27.06.1991 FR 9107950
(43) Date de publication de la demande: 30.12.1992
(73) Titulaire: SEXTANT AVIONIQUE, F-92366 Meudon la Forêt Cédex (FR)
(72) Inventeur: Roudavitch, Georges, F-86100 Chalellerault (FR)
(74) Mandataire: de Saint-Palais, Arnaud Marie

(56) Documents cités:
- EP-A- 0 006 051
- EP-A- 0 313 470
- DE-A- 1 573 960
- DE-A- 2 100 583
- DE-B- 1 029 598
- DE-B- 1 219 252
- GB-A- 1 049 151

## Description

La présente invention concerne une bielle dynamométrique, c'est-à-dire une bielle apte à fournir une information relative à l'amplitude des efforts qu'elle transmet selon un axe longitudinal.

D'une manière générale, on sait que le brevet FR No 2 434 377 (EP-A-6051) a déjà proposé une bielle de ce genre comportant au moins deux éléments mâle et femelle montés axialement coulissants l'un dans l'autre et sollicités l'un et l'autre par des moyens élastiques disposés de manière à ce qu'un effort transmis par la bielle provoque un déplacement relatif représentatif dudit effort. La détection de ce mouvement relatif est alors assurée grâce à un levier monté basculant à l'intérieur de l'élément femelle, dont une extrémité coopère avec une came portée par l'élément mâle et dont l'autre extrémité est destinée à agir sur un microcontact lorsque le déplacement relatif des deux éléments et donc le basculement du levier dépasse un seuil déterminé.

Bien entendu, pour éviter toute perturbation de la chaîne cinématique dans laquelle se trouve incorporée la bielle, le déplacement relatif des deux éléments doit être aussi faible que possible, et doit intervenir, de préférence, en dehors des valeurs de charge normales de la bielle.

A cet effet, ce brevet prévoit deux mesures, à savoir :
- une précontrainte des moyens élastiques pour faire en sorte que le déplacement relatif des deux pièces n'intervienne qu'au-delà d'un seuil d'effort prédéterminé ;
- un dimensionnement du levier et une disposition du microcontact conçus de manière à ce que la commutation effectuée par ce dernier n'intervienne que lors du dépassement d'un second seuil d'effort supérieur au premier.

Il s'avère que les solutions proposées dans ce brevet présentent deux inconvénients.

Le premier de ces inconvénients consiste en ce que le système came-butée-levier est relativement encombrant et exige une amplification relativement importante du mouvement relatif détecté et, par conséquent, une longueur importante du levier. De ce fait, l'élément femelle de la bielle qui contient ce système doit être relativement long et volumineux. L'usage de deux leviers, dont l'un porte le microcontact, permet de réduire de moitié la longueur de cet élément. Toutefois, cette réduction de longueur s'effectue au détriment du diamètre qui doit être augmenté.

Le deuxième inconvénient a trait au fait que ce dispositif ne permet pas de déterminer le sens de l'effort qui est transmis par la bielle. Or, cette information est relativement importante puisqu'elle permet de distinguer un effort moteur d'un effort résultant d'une contrainte extérieure appliquée au niveau de la charge.

L'invention a donc plus particulièrement pour but de supprimer ces inconvénients.

Elle propose, à cet effet, une bielle dynamométrique du type comprenant un premier élément de transmission monté axialement coulissant par rapport à un second élément de transmission, avec interposition d'éléments élastiques disposés de manière à subir une déformation élastique pour tout déplacement relatif de l'un des éléments par rapport à l'autre, à partir d'une position de repos, le déplacement relatif des deux pièces étant amplifié par un levier comportant au moins deux bras monté basculant sur l'un des deux éléments, et sur lequel agit l'autre élément, la détection de l'effort transmis par la bielle étant assurée par au moins un dispositif de détection de la position de l'extrémité libre du levier.

Selon l'invention, cette bielle est caractérisée en ce que le susdit levier comporte un bras radial articulé sur l'un des éléments et comportant, à distance de l'articulation, des moyens assurant une liaison axiale, dans les deux sens, à l'élément mâle, et un bras axial présentant une extrémité libre, de part et d'autre de laquelle sont disposés deux organes de détection de ladite extrémité du levier, chacun de ces organes de détection étant affecté à un sens de l'effort transmis par la bielle.

Avantageusement, les susdits organes de détection pourront consister en des micro-interrupteurs disposés vis-à-vis du bras axial, de manière à n'être actionnés qu'au-delà d'une course de basculement déterminée du levier.

Des modes d'exécution de l'invention seront décrits ci-après, à titre d'exemples non limitatifs, avec référence aux dessins annexés dans lesquels :
La figure 1 est une coupe axiale d'un premier mode d'exécution d'un vérin selon l'invention ;
La figure 2 est une vue en perspective écorchée à plus grande échelle du détail de la figure 1 indiqué par le cercle D₁ ;
La figure 3 est une coupe axiale d'un deuxième mode d'exécution d'un vérin selon l'invention ;
La figure 4 est une vue en perspective écorchée à plus grande échelle du détail de la figure 3 indiqué par le cercle D₂.

Dans ces exemples, la bielle dynamométrique se compose d'une partie mâle constituée par une tige cylindrique épaulée 1 et d'une partie femelle se présentant sous la forme d'un manchon 2 en partie tubulaire comprenant, d'un côté, un alésage cylindrique à plusieurs niveaux 3 dans lequel est montée coulissante la partie mâle 1 et, de l'autre côté, des moyens de fixation 4 de type classique.

Le montage coulissant de la tige 1 à l'intérieur de l'alésage 3 s'effectue au moyen de deux douilles-palier 5, 6 qui délimitent entre elles un espace annulaire 7 dans lequel s'engage un épaulement 8 de la tige 1.

Chacune des douilles 5, 6 comprend, dans sa région adjacente à l'espace annulaire 7, un étagement 9 qui délimite, avec la tige 1, un volume annulaire axial dans lequel est disposé un ressort précontraint 10, 11 qui vient porter, par l'intermédiaire d'une rondelle 12, sur l'épaulement 8.

Les deux ressorts 10, 11 ainsi que la précontrainte qu'ils subissent sont identiques, de manière à ce qu'en l'absence d'effort appliqué sur la bielle, l'épaulement 8 soit disposé au centre de l'espace annulaire 7 et soit mobile, de part et d'autre de cette position, sur une longueur ± ε déterminée, et ce, contre l'action des ressorts 10, 11.

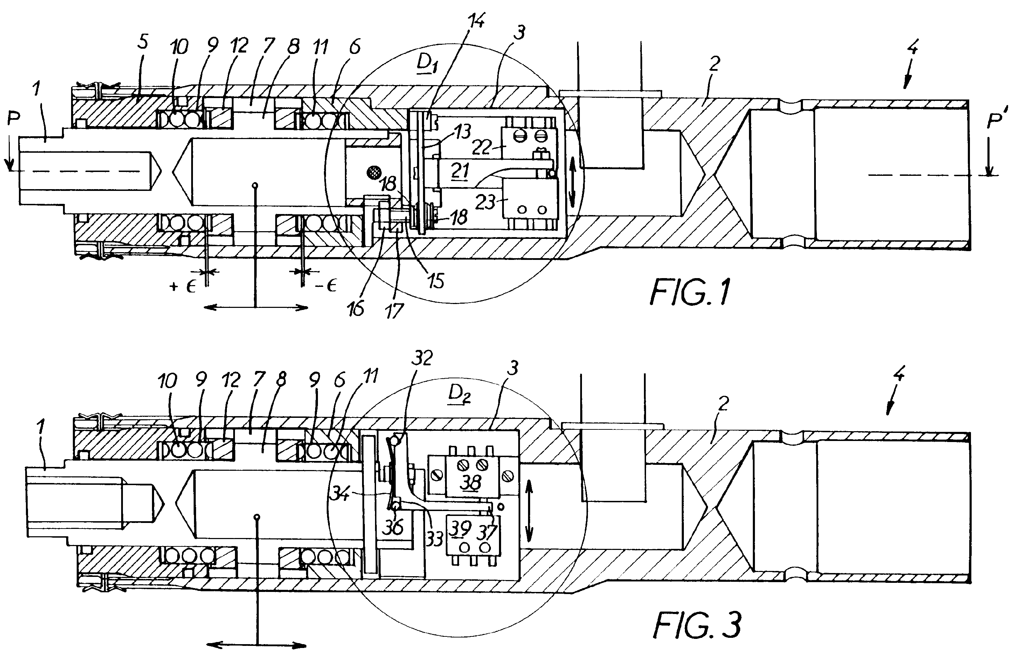

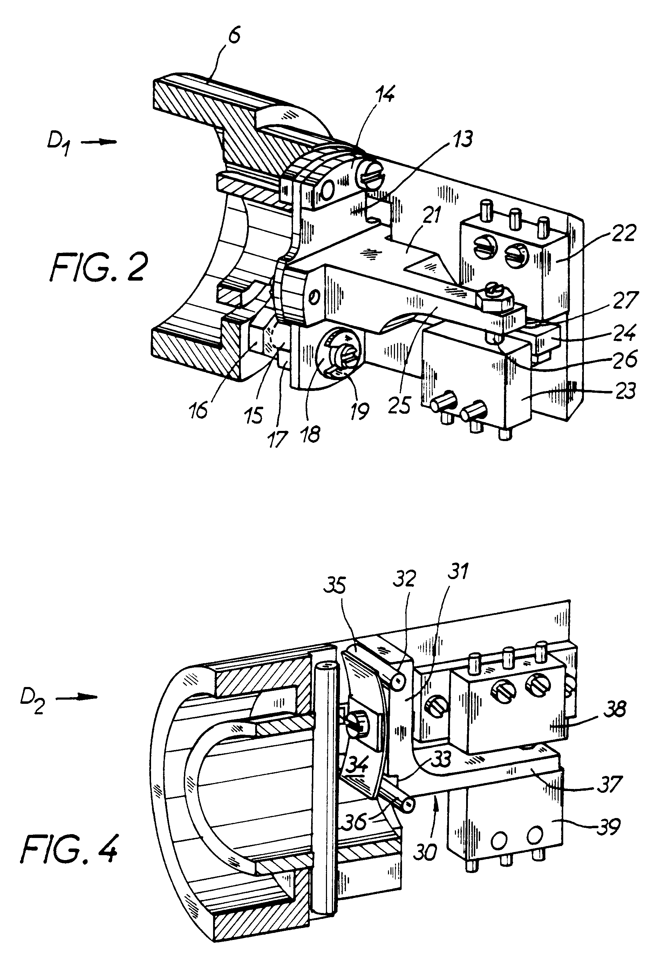

Dans l'exemple représenté sur les figures 1 et 2, le dispositif de détection du mouvement relatif entre les parties mâle et femelle de la bielle se compose d'une plaquette radiale 13 réalisée en un matériau élastiquement déformable et fixée par l'une de ses extrémités 14 sur la tranche de la douille-palier 6. L'autre extrémité de cette plaquette 13 est munie d'un perçage au travers duquel passe une vis axiale 15 dont l'extrémité vient se visser sur un écrou 16 solidaire d'une collerette 17 de la tige 1.

La solidarisation de la vis 15 à la plaquette 13 est assurée grâce à des rondelles élastiques 18 disposées de part et d'autre de la plaquette 13, cet ensemble étant maintenu axialement grâce à un épaulement formé d'un côté sur la tige 1 et à une pince élastique (circlip) 19 engagée dans une gorge pratiquée au niveau de la tête de la vis 15.

Sur la partie centrale de la plaquette 13 est rigidement fixé un bras de levier 21 qui s'étend axialement à l'intérieur de l'alésage 3 et dont l'extrémité libre coopère avec deux microcontacts 22, 23 disposés en opposition l'un par rapport à l'autre.

Dans cet exemple, dans le but de réduire l'encombrement, l'extrémité libre du bras de levier 21 comprend deux portions axiales 24, 25 décalées l'une par rapport à l'autre dans un plan de rotation perpendiculaire au plan médian de symétrie P, P′ de la bielle (et perpendiculaire à l'axe de rotation du levier). Chacune de ces portions est munie d'une butée réglable 26, 27 destinée à agir sur l'organe d'actionnement d'un microcontact 22, 23 correspondant. Le gain de place obtenu est dû au fait que le décalage des deux portions de bras 24, 25 autorise un léger chevauchement des deux microcontacts 22, 23 dans un plan perpendiculaire au plan P, P′.

Le fonctionnement de la bielle précédemment décrite est alors le suivant :

En l'absence d'effort transmis par la bielle (état de repos) ou même, lorsque l'effort transmis demeure inférieur à une première valeur de seuil qui est fonction de la raideur des ressorts 10, 11 et de leur taux de précontrainte :
- l'épaulement 8 de la tige 1 est centré dans l'espace annulaire 7,
- la plaquette 13, qui n'est pas sollicitée par la tige 1, s'étend radialement,
- les deux portions 24, 25 du bras de levier 21 s'étendent parallèlement au plan longitudinal de symétrie P, P′ et n'agissent pas sur les microcontacts 22, 23.

Lorsque l'effort transmis par la bielle, dans le sens tige 1/manchon 2, devient supérieur au premier seuil, il se produit un déplacement relatif entre ces deux pièces 1, 2 avec, simultanément, compression du ressort 11.

La plaquette 13, dont l'extrémité libre est déplacée axialement (vers l'extrémité libre du manchon 2), se déforme élastiquement autour d'un axe d'articulation situé au voisinage de l'extrémité 14.

Du fait de cette déformation, le levier 21 bascule vers le haut en entraînant la portion de bras 24 vers l'organe d'actionnement du microcontact 22.

Lorsque l'effort transmis par la bielle dépasse un second seuil (dont la valeur est ajustée grâce à la butée réglable 27) la portion de bras 24 agit sur le microcontact 22 en provoquant sa commutation. Avantageusement, ce microcontact 22 (de même que le microcontact 23) pourra être connecté à un circuit de contrôle et/ou de sécurité apte à exploiter convenablement l'information relative au changement d'état de ce microcontact.

Par un processus similaire, lorsqu'un effort exercé dans le sens manchon 2/tige 1 dépasse le premier seuil, la plaquette 13 entraînée en direction de la tige 1, se déforme élastiquement en provoquant un basculement vers le bas du bras de levier 21. Lorsqu'ensuite cet effort s'élève au-dessus du second seuil, la portion de bras 25 actionne le micro-interrupteur 23.

Il est clair que le sens de l'effort qui est transmis par la bielle est déterminé par le micro-interrupteur 22, 23 qui a été sollicité.

Bien entendu, les deux seuils précédemment mentionnés peuvent être sensiblement confondus en un seul seuil. Dans ce cas, les butées réglables 26, 27 doivent être ajustées de manière à venir en prise avec les organes d'actionnement des microcontacts 22, 23, au voisinage du seuil de commutation de ces derniers.

Le mode d'exécution représenté sur les figures 3 et 4 permet à la fois :
- d'améliorer la précision de la bielle dynamométrique, et
- d'accroître (pratiquement de doubler) le coefficient du multiplicateur de déplacement constitué par le levier.

Dans cet exemple, l'ensemble constitué par la plaquette et le levier est remplacé par un levier coudé rigide 30 en forme de L couché, dont la petite branche 31 qui présente une longueur sensiblement égale au rayon de l'alésage 3, présente sur sa face extérieure, d'une part, une encoche 32 de section en forme de V située à son extrémité adjacente à la paroi de l'alésage 3 et, d'autre part, une encoche rectangulaire 33 de section rectangulaire, axée parallèlement à la précédente, et située au niveau de la seconde extrémité.

L'encoche 32 est maintenue appliquée, grâce à une languette flexible 34 fixée dans le centre de la branche 31, contre un axe 35 solidaire du manchon 2 qui constitue l'axe de pivotement du levier 30.

De même, l'encoche 33 est maintenue appliquée, par la languette 34, contre un axe 36 parallèle à l'axe 35 mais solidaire de la tige 1.

En fait, la combinaison encoches 32, 33/axes 35, 36/languette 34 assure la fonction d'une double liaison articulée, avec une articulation sans jeu sur le manchon 1 (axe 32/encoche 35) et une articulation dotée d'un jeu radial mais non axial (axe 36/encoche 33).

Dans cet exemple, l'axe 36 ainsi que la grande branche 37 du levier 30, s'étendent dans le plan longitudinal de symétrie P, P′ de la bielle, les deux microcontacts 38, 39 étant situés de part et d'autre de l'extrémité de la branche 37 et donc de ce plan de symétrie P, P′.

Le fonctionnement de cette bielle est similaire à celui précédemment décrit.

Ainsi, un déplacement rotatif tige 1/manchon 2 va provoquer, grâce à l'action de l'axe 36 sur l'encoche 33, un déplacement de l'extrémité de la branche 31 du levier 30 et, en conséquence, un basculement vers le haut de l'ensemble du levier 30 autour de l'axe 35. Au-delà d'un seuil d'effort déterminé, ce basculement provoquera le changement d'état du microcontact 38.

Un déplacement relatif manchon 2/tige 1 provoquera, quant à lui, grâce à l'action de l'axe 36 sur la languette 34, une rotation en sens inverse du levier 30 et un actionnement du microcontact 39.

Compte tenu du fait que le point d'application de l'effort exercé par la tige 1 sur le levier 30 est beaucoup plus rapproché de l'axe d'articulation 35 que dans l'exemple précédent, l'angle de rotation, pour un même déplacement, sera plus important (ici sensiblement le double). Le déplacement de l'extrémité (bras 37) du levier 30 (à longueur égale) sera donc le double du précédent.

Il devient donc possible de réduire la longueur du levier 30 et donc les dimensions de la bielle tout en obtenant cependant une précision supérieure à celle obtenue dans le mode d'exécution précédemment décrit.

## Revendications

1. Bielle dynamométrique du type comprenant un premier élément de transmission (1) monté axialement coulissant par rapport à un second élément de transmission (2), avec interposition d'éléments élastiques (10, 11) disposés de manière à subir une déformation élastique pour tout déplacement relatif de l'un des éléments par rapport à l'autre, à partir d'une position de repos, la détection du déplacement relatif des deux pièces (1, 2) étant amplifiée par un levier (21, 30) comportant au moins deux bras monté basculant sur l'un des deux éléments (2) et sur lequel agit l'autre élément (1), la détection de l'effort transmis par la bielle étant assurée par au moins un dispositif de détection de la position de l'extrémité libre du levier (21, 30),
caractérisée en ce que le levier comporte un bras radial (13, 31) articulé sur l'un des éléments (2) et comportant, à distance de l'articulation, des moyens (15 à 18 et 34, 36) assurant une liaison axiale, dans les deux sens, à l'autre élément (1), et un bras axial (21, 37) présentant une extrémité libre de part et d'autre de laquelle sont disposés deux organes de détection (22, 23 - 38, 39) de la position de ladite extrémité, chacun de ces organes de détection (22, 23 - 38, 39) étant affecté à un sens différent de l'effort transmis par la bielle.

2. Bielle dynamométrique selon la revendication 1,
caractérisée en ce que les susdits éléments de transmission (1, 2) sont de type mâle et femelle et coulissent respectivement l'un dans l'autre, et en ce que, dans ce cas, le susdit levier (21, 30) est articulé dans la partie femelle (2) et accouplé à la partie mâle (1).

3. Bielle dynamométrique selon l'une des revendications 1 et 2,
caractérisée en ce que les susdits organes de détection (22, 23 - 38, 39) consistent en des micro-interrupteurs disposés vis-à-vis du bras radial (21, 37) de manière à n'être actionnés qu'au-delà d'une course de basculement déterminée du levier.

4. Bielle dynamométrique selon l'une des revendications précédentes,
caractérisée en ce que l'extrémité libre du susdit levier (21) est munie de butées réglables (26, 27) aptes à agir sur les organes d'actionnement des microcontacts (22, 23).

5. Bielle dynamométrique selon l'une des revendications précédentes,
caractérisée en ce que le susdit levier comprend une plaquette radiale (13), réalisée en un matériau élastiquement déformable, et solidarisée à l'élément femelle (2) par l'une de ses extrémités, cette plaquette (13) étant reliée à l'élément mâle (1), par son autre extrémité et comprenant une partie centrale sur laquelle est rigidement fixé un bras de levier (21) de part et d'autre duquel sont disposés les susdits microcontacts (22, 23).

6. Bielle dynamométrique selon la revendication 5,
caractérisée en ce que le susdit bras de levier (21) comprend deux portions axiales (24, 25) décalées l'une par rapport à l'autre dans un plan perpendiculaire à l'axe de rotation du levier.

7. Bielle dynamométrique selon l'une des revendications 1 à 5,
caractérisée en ce que le susdit levier (30) est rigide et présente une forme coudée, dont une première branche (31) est articulée sans jeu, par son extrémité libre, à l'élément femelle (2), tandis qu'au niveau de la partie coudée, elle est articulée avec un léger jeu radial, au susdit élément mâle (1), l'autre branche (37) du levier s'étendant axialement entre les deux susdits microcontacts (38, 39).

8. Bielle dynamométrique selon la revendication 7,
caractérisée en ce que l'articulation entre le levier (30)et l'élément femelle (2) fait intervenir une encoche (32) de section en forme de V formée sur l'extrémité libre de la première branche (31), cette encoche (32) étant maintenue appliquée contre un axe (35) solidaire de l'élément femelle (2) grâce à une languette élastique (34) solidaire dudit levier (30).

9. Bielle dynamométrique selon l'une des revendications 7 et 8,
caractérisée en ce que l'articulation entre le levier (30) et l'élément mâle (1) fait intervenir une encoche (33) de section rectangulaire formée sur la première branche au niveau de la portion coudée, cette encoche (33) étant maintenue appliquée contre un axe (36) solidaire de l'élément mâle (1) grâce à la susdite languette élastique (34).

## Patentansprüche

1. Dynamometrische Stange des Typs mit einem ersten Übertragungselement (1), das im Verhältnis zu einem zweiten Übertragungselement (2) axial gleitend montiert ist, unter Zwischenfügung elastischer Elements (10, 11), die so angeordnet sind, dass sie elastisch verformt werden, wenn, von der Ruhestellung ausgehend, eines der Elemente im Verhältnis zum anderen relativ verschoben wird, wobei die Erfassung der relativen Verschiebung der beiden Teile (1, 2) von einem Hebel (21, 30) mit wenigstens zwei Schenkeln verstärkt wird, der kippbar auf eines der beiden Elemente (2) montiert ist und auf den das andere Element (1) einwirkt, wobei die Erfassung der von der Stange übertragenen Kraft durch mindestens eine Vorrichtung zur Erfassung der Stellung des freien Endes des Hebels (21, 30) erfolgt,
dadurch gekennzeichnet, dass der Hebel einen radial ausgerichteten Schenkel (13, 31) aufweist, der an eines der Elements (2) angelenkt ist und in einer gewissen Entfernung von der Anlenkung Mittel (15 bis 18 und 34, 36) aufweist, die eine axiale Verbindung in beiden Richtungen zum anderen Element (1) ermöglichen und einen axial ausgerichteten Schenkel (21, 37), mit einem freien Ende zu dessen beiden Seiten zwei Organe (22, 23 - 38, 39) zur Erfassung der Stellung des besagten Endes angeordnet sind und jedes dieser Erfassungsorgane (22, 23 - 38, 39) die von der Stange übertragene Kraft in einer verschiedenen Richtung erfasst.

2. Dynamometrische Stange nach Anspruch 1,
dadurch gekennzeichnet, dass die besagten Übertragungselemente (1, 2) männlicher und weiblicher Art sind und jeweils ineinandergleiten und dass in diesem Falle der besagte Hebel (21, 30) im weiblichen Teil (2) angelenkt und mit dem männlichen Teil (1) gekuppelt ist.

3. Dynamometrische Stange nach einem der Ansprüche 1 und 2,
dadurch gekennzeichnet, dass besagte Erfassungsorgane (22, 23 - 38, 39) Mikroschalter sind, die so gegenüber dem radial ausgerichteten Schenkel (21, 37) angeordnet sind, dass sie nur nach Überschreiten eines bestimmten Kipphubs des Hebels betätigt werden.

4. Dynamometrische Stange nach einem der vorhergehenden Ansprüche,
dadurch gekennzeichnet, dass das freie Ende des besagten Hebels (21) mit einstellbaren Anschlägen (26, 27) versehen ist, die auf die Betätigungsorgane der Mikrokontakte (22, 23) einwirken.

5. Dynamometrische Stange nach einem der vorhergehenden Ansprüche,
dadurch gekennzeichnet, dass besagter Hebel ein radial ausgerichtetes Plättchen (13) aus elastischem Material aufweist, welches durch eines seiner Enden fest mit dem weiblichen Element (2) verbunden ist und das andere Ende dieses Plättchens (13) mit dem männlichen Element (1) verbunden ist und einen Mittelteil aufweist, auf dem ein Hebelschenkel (21) starr befestigt ist, zu dessen beiden Seiten die besagten Mikrokontakte (22, 23) angeordnet sind.

6. Dynomometrische Stange nach Anspruch 5,
dadurch gekennzeichnet, dass besagter Hebelschenkel (21) zwei axial ausgerichtete Abschnitte (24, 25) aufweist, die in einer zur Drehachse des Hebels senkrechten Ebene gegeneinander versetzt sind.

7. Dynamometrische Stange nach einem der Ansprüche 1 bis 5,
dadurch gekennzeichnet, dass besagter Hebel (30) starr und knieförmig gebogen ist und das freie Ende des ersten Schenkels (31) ohne Spiel an das weibliche Element (2) angelenkt ist, während besagter Schenkel im gebogenen Bereich mit einem geringen radialen Spiel an das männliche Element (1) angelenkt ist und der andere Schenkel (37) des Hebels sich axial zwischen den beiden Mikrokontakten (38, 39) erstreckt.

8. Dynamometrische Stange nach Anspruch 7,
dadurch gekennzeichnet, dass die Anlenkung zwischen dem Hebel (30) und dem weiblichen Element (2) einen im Querschnitt V-förmigen, am freien Ende des ersten Schenkels (31) angebrachten, Einschnitt (32) umfasst, welch Einschnitt (32) gegen eine mit dem weiblichen Element (2) fest verbundene Welle (35) angelegt ist, durch eine elastische, fest mit besagtem Hebel (30) verbundene Zunge (34).

9. Dynamometrische Stange nach einem der Ansprüche 7 und 8,
dadurch gekennzeichnet, dass die Anlenkung zwischen dem Hebel (30) und dem männlichen Element (1) einen im Querschnitt rechteckigen, auf dem ersten Schenkel im Bereich des gebogenen Abschnittes angebrachten, Einschnitt (33) umfasst, welch Einschnitt (33) gegen eine mit besagtem männlichem Element fest verbundene Welle (36) angelegt ist, dank der besagten elastischen Zunge (34).

## Claims

1. Dynamometer link of the type comprising a first transmission member (1) adapted to slide axially relative to a second transmission member (2) with spring means (10, 11) disposed between said first and second transmission members so as to be elastically deformed by any relative displacement of one member relative to the other from a rest position, relative displacement of said two members (1, 2) being amplified by a lever (21, 30) with at least two arms, pivotally mounted on one (2) of said two members and on which the other member (1) operates, a force transmitted by said link being detected by at least one device for detecting the position of the free end of said lever (21, 30),
characterized in that said lever comprises a radial arm (13, 31) articulated to one of said members (2) and comprising at a distance from the articulation, means (15 to 18 and 34 to 36) providing a two-way axial coupling to the other member (1) and an axial arm (21, 37) having a free end on respective sides of which are disposed two members (22, 23 - 38, 39) for detecting the position of said end, each detector member (22, 23 - 38, 39) being assigned to a different direction of the force transmitted by the link.

2. Dynamometer link according to claim 1,
characterized in that said transmission members (1, 2) are of the male and female type and one slides inside the other, and in that said lever is articulated in said female member (2) and coupled to said male member (1).

3. Dynamometer link according to one of claims 1 and 2,
characterized in that said detector members (22, 23 - 38, 39) are microswitches facing said radial arm (21, 37) so as to be operated only beyond a particular tilting travel of said lever.

4. Dynamometer link according to one of the preceding claims,
characterized in that the free end of said lever (21) carries adjustable abutments (26, 27) adapted to operate on actuator members of said microswitches (22, 23).

5. Dynamometer link according to one of the preceding claims,
characterized in that said lever comprises a radial plate (13) made from an elastically deformable material and fastened to said female member (2) at one of its ends, said plate (13) being coupled to said male member (1) at its other end and having a central part to which is rigidly fixed a lever arm (21) on opposite sides of which are disposed said microswitches (22, 23).

6. Dynamometer link according to claim 5,
characterized in that said lever arm (21) comprises two axial portions (24, 25) offset relative to each other in a plane perpendicular to the rotation axis of said lever.

7. Dynamometer link according to one of claims 1 to 5,
characterized in that said lever (30) is rigid and has a cranked shape with a first branch (31) articulated without play at its free end to said female member (2) and articulated with slight radial play to said male member (1) in the cranked portion, the other branch (37) of said lever being disposed axially between said two microswitches (38, 39).

8. Dynamometer link according to claim 7,
characterized in that the articulation between the lever (30) and said female member (2) incorporates a V-shape notch (32) formed at the free end of said first branch (31), said notch (32) being held against a pin (35) fastened to said female member (2) by a spring tang (34) fastened to said lever (30).

9. Dynamometer link according to one of claims 7 and 8,
characterized in that the articulation between said lever (30) and said male member (1) incorporates a rectangular notch (33) formed on said first branch at the level of said cranked portion, said notch (33) being held against a pin (36) fastened to said male member (1) by said elastic tang (34).
